# EUROPÄISCHE PATENTSCHRIFT

(11) **EP 4 062 078 B1**
(45) Veröffentlichungstag und Bekanntmachung des Hinweises auf die Patenterteilung: **03.01.2024**
(21) Anmeldenummer: 20801158.5
(22) Anmeldetag: 28.09.2020
(51) Int. Cl.: F16C 35/02, F03D 80/70, F16C 17/02, F16C 23/04

(54) **LAGERANORDNUNG UND VERFAHREN ZUM MONTIEREN EINER SOLCHEN**
BEARING ARRANGEMENT AND METHOD FOR PRODUCING SAID TYPE OF BEARING ARRANGMENT
AGENCEMENT DE PALIER ET PROCÉDÉ DE FABRICATION DUDIT TYPE D'AGENCEMENT DE PALIER

(30) Priorität: 19.11.2019 DE 102019131245
(43) Veröffentlichungstag der Anmeldung: 28.09.2022
(73) Patentinhaber: MIBA Industrial Bearings Germany Osterode GmbH, 37520 Osterode (DE)
(72) Erfinder: LAABID, Abdelhakim, 37073 Göttingen (DE); KOCH, Thilo, 37115 Duderstadt (DE); HEIN, Andreas, 31180 Giesen (DE)
(74) Vertreter: Gramm, Lins & Partner Patent- und Rechtsanwälte PartGmbB
(86) Internationale Anmeldenummer: PCT/EP2020/077136
(87) Internationale Veröffentlichungsnummer: WO 2021/099017

(56) Entgegenhaltungen:
- WO-A1-2011/127510
- WO-A1-2015/022309
- DE-A1- 19 507 516
- US-A- 5 529 399
- US-A- 5 669 717

## Beschreibung

Die Erfindung betrifft eine Lageranordnung zum Lagern einer Rotorwelle einer Windkraftanlage, wobei die Lageranordnung ein äußeres Gehäuse und ein Lager mit einer Mehrzahl von Gleitlagersegmenten aufweist, wobei das Lager zwei ringförmige Stützkörper mit jeweils einer sphärischen Aufnahmefläche aufweist, die an dem äußeren Gehäuse angeordnet sind, wobei die Gleitlagersegmente mit einer sphärischen Anlagefläche an den Aufnahmeflächen anliegen. Die Erfindung betrifft zudem ein Verfahren zum Montieren einer derartigen Lageranordnung. Das äußere Gehäuse wird auch als Lagergehäuse bezeichnet.

Eine derartige Lageranordnung ist aus der US 5,529,399 bekannt. Die US 5,669,717 A beschreibt eine Lageranordnung, bei der zwischen einzelnen der Gleitlagersegmente Positionierstifte angeordnet sind, durch die die einzelnen Segmente zueinander positioniert und ausgerichtet werden können.

Das Lager und/oder die Lageranordnung einer Rotorwelle einer Windkraftanlage ist hohen Belastungen ausgesetzt und muss dennoch über eine möglichst lange Zeit möglichst ohne Wartung zumindest aber wartungsfreundlich funktionieren. Es ist aufgrund der wechselnden Windverhältnisse unterschiedlichen mechanischen Belastungen ausgesetzt, die insbesondere durch Windspitzen und unterschiedliche Windrichtungen oder Verzahnungen im Getriebe hervorgerufen werden. Daher werden herkömmlicherweise Radiallager und Axiallager verwendet.

Die Lageranordnung zum Lagern einer Rotorwelle einer Windkraftanlage ist in der Gondel der Windkraftanlage, mithin also auf dem eigentlichen Turm, angeordnet. Dieser Ort ist schwer zugänglich, wodurch Wartungen, Reparaturen oder der Austausch von Bauteilen oder der gesamten Lageranordnung schwierig, zeitaufwendig und damit kostenintensiv ist. Auch die Montage der Lageranordnung wird durch die Position in der Gondel erschwert, da die Einzelteile der Lageranordnung vorzugsweise mittels eines Bordkrans in die gewünschte Position gebracht werden müssen. Die Einzelteile der Lageranordnung sollten oder dürfen daher maximale Maße, insbesondere aber ein maximales Gewicht nicht überschreiten. Anstelle eines Bordkrans, der zu der Windkraftanlage gehört und beispielsweise fest an der Gondel angeordnet ist, kann zum Montage und Demontage, sowie zur Wartung und Reparatur einzelner Bauteile der Windkraftanlage ein Montagekran verwendet werden, der im Vergleich zu einem Bordkran jedoch teurer und zeitlich aufwändiger zu handhaben ist.

Da die Leistung einer Windkraftanlage von ihrem Rotor-Durchmesser abhängt und mit wachsendem Durchmesser steigt, sind die hergestellten und herzustellenden Windkraftanlagen in den letzten Jahren immer größer geworden. Dies hat zur Folge, dass auch die Lageranordnungen zum Lagern der Rotorwelle größer und insbesondere schwerer ausgebildet werden, wodurch sie schlechter handhabbar und transportierbar sind.

Aus der WO 2011/127510 A1 ist eine Gleitlager-Anordnung zum Lagern einer Rotorwelle einer Windkraftanlage bekannt, die zwei Lagerflächen aufweist, die gegeneinander verkippt sind. Dadurch wirkt die Lageranordnung sowohl als Axiallager als auch als Radiallager. Die jeweiligen Lagerflächen sind mit Gleitlager-Pads ausgestattet, die als eigentlicher Gleitkörper dienen. Der Austausch defekter Gleitlager-Pads ist jedoch nur möglich, nachdem die gesamte Lageranordnung demontiert wurde.

Der Erfindung liegt daher die Aufgabe zugrunde eine Lageranordnung für die Rotorwelle einer Windkraftanlage vorzuschlagen, die auch bei großen Rotorwellen gut handhabbar ist und zudem leicht gewartet und repariert werden kann.

Die Erfindung löst die gestellte Aufgabe mit einer Lageranordnung gemäß dem Oberbegriff des Anspruchs 1, die sich dadurch auszeichnet, dass einer der zwei Stützkörper derart angeordnet ist, dass er in axialer Richtung bezüglich der Längsrichtung einer in der Lageranordnung zu lagernden Welle entfernbar ist, ohne dass die Welle aus der Lageranordnung entfernt werden muss.

Die einzelnen Gleitlagersegmente verfügen über eine sphärische Anlagefläche, mit der sie an den Aufnahmeflächen der Stützkörper anliegen. Diese Anlagefläche ist bevorzugt außen an den Gleitlagersegmenten angeordnet, so dass diese an der Innenseite der Stützkörper anliegen. Auf der gegenüberliegenden Seite verfügen auch die Gleitlagersegmente über eine innenliegende Fläche, die die eigentliche Gleitfläche bildet und möglichst vollflächig besetzt ist und die zuverlässige Aufnahme der Rotorwelle ermöglicht. Die Lageranordnung dient in diesem Fall als Radiallager. Der Ölspalt trennt die Gleitfläche des Lagers, vorliegend also die Gleitflächen der Gleitlagersegmente, von der sich bewegenden Welle. Dazu ist eine möglichst einheitliche Gleitfläche von Vorteil, die insbesondere keine Stufen aufweisen sollte.

Vorzugsweise verfügt die Lageranordnung über so viele Gleitlagersegmente, dass diese die zu lagernden Rotorwelle vollständig oder zumindest nahezu vollständig umgeben. Die Anzahl der verwendeten Gleitlagersegmente kann dabei insbesondere von der Größe, insbesondere dem Durchmesser der zu lagernden Rotorwelle abhängig gemacht werden. Je größer der Durchmesser der Rotorwelle ist, desto größer muss die Lageranordnung ausgebildet sein und desto mehr Gleitlagersegmente sollten verwendet werden. Auf diese Weise wird das maximale Gewicht und auch die geometrische Abmessung der Gleitlagersegmente in einem handhabbaren Bereich gehalten.

Die Gleitlagersegmente selbst sind an den zwischen dem äußeren Gehäuse und den Gleitlagersegmenten positionierten Stützkörpern angeordnet. Dies hat den Vorteil, dass das äußere Gehäuse, mit relativ großen Fertigungstoleranzen hergestellt werden kann, wodurch die Herstellungskosten gesenkt werden. Lediglich die Stützkörper sind mit kleineren Fertigungstoleranzen, also genauer, herzustellen, um eine möglichst optimale Passform mit den einzelnen Gleitlagersegmenten zu erreichen.

Die beiden ringförmigen Stützkörper sind koaxial zueinander ausgebildet. Sie sind vorzugsweise rotationssymmetrisch, sodass sowohl die innenliegende Aufnahmefläche ringförmig ausgebildet ist als auch eine außenliegende Kontaktfläche, mit der die Stützkörper in Kontakt mit dem äußeren Gehäuse kommen. Die rotationsförmigen Stützkörper verfügen über eine zentrale Rotationsachse, die im Mittelpunkt des Rings, den die ringförmigen Stützkörper bilden, liegt. Durch die koaxiale Anordnung der beiden ringförmigen Stützkörper verfügen die beiden Stützkörper über dieselbe Rotationsachse. Diese fällt in der optimalen Positionierung mit der Längsachse der zu lagernden Rotorwelle zusammen. Dies bedeutet jedoch nicht zwangsläufig, dass der Abstand der Aufnahmeflächen von der zentralen Rotationsachse auch entlang der Rotationsachse identisch bleibt. Vielmehr ist es auch möglich, dass dieser Abstand und damit der Durchmesser, insbesondere der Innendurchmesser der Aufnahmefläche und damit des jeweiligen Stützkörpers in axialer Richtung zunimmt oder abnimmt. Dies kann für die Positionierung der Gleitlagersegmente in den Stützkörpern von Vorteil sein.

In einer bevorzugten Ausgestaltung sind die Stützkörper derart angeordnet und ausgebildet, dass die sphärischen Aufnahmeflächen den gleichen Radius und den gleichen Mittelpunkt aufweisen. Der Kugelmittelpunkt der sphärischen Aufnahmefläche liegt auf der Rotationsachse des Stützkörpers und ist eindeutig festgelegt. Gleiches gilt für den Kugelradius, also den Abstand der Aufnahmefläche von diesem Mittelpunkt. Der Kugelradius ist dabei gegebenenfalls unterschiedlich vom Radius des ringförmigen Stützkörpers, also vom Abstand eines Punktes auf der Aufnahmefläche von der Rotationsachse des Stützkörpers.

Bevorzugt sind die Aufnahmeflächen beider Stützkörper kugelringförmig ausgebildet, wobei sie den gleichen Kugelradius aufweisen. In diesem Fall ist es möglich, die beiden Stützkörper so zueinander positionieren, dass die beiden Aufnahmeflächen auch den gleichen Kugelmittelpunkt aufweisen. Dies bedeutet, die beiden Aufnahmeflächen kugelringförmig sind und über den gleichen Radius und Mittelpunkt verfügen.

Besonders bevorzugt sind in diesem Fall auch die Anlageflächen der unterschiedlichen Gleitlagersegmente kugelflächenförmig ausgebildet, sodass sie zu den Aufnahmeflächen der Stützkörper korrespondierend ausgebildet sind. Besonders bevorzugt verfügen auch die Anlageflächen der unterschiedlichen Gleitlagersegmente über den gleichen Kugelradius und den gleichen Kugelmittelpunkt, sodass sie gemeinsam ebenfalls kugelringförmig ausgebildet sind. Spalte, Schlitze und Abstände zwischen den einzelnen Gleitlagersegmenten ändern daran im Sinne der vorliegenden Erfindung nichts. Durch die Ausbildung der gemeinsamen Anlagefläche der Gleitlagersegmente, die durch die einzelnen Anlageflächen der einzelnen Gleitlagersegmente gebildet wird, als Teil einer Kugelfläche und die korrespondierend ausgebildeten Aufnahmeflächen der Stützkörper wird eine besonders vorteilhafte Lagerung der Gleitlagersegmente an den Stützkörpern erreicht, wenn die Rotorwelle in der Lageranordnung positioniert ist. Durch die kugellagerartige Lagerung sind Bewegungen der Rotorwelle senkrecht zu ihrer Längserstreckung, beispielsweise Verkippungen in begrenztem Maße möglich, ohne dass es zu einer Verkantung kommt. Wirken also beispielsweise Windböen aus unterschiedlichen Richtungen auf den Rotor, dessen Rotorwelle gelagert wird, ein, kann die in dieser Form ausgebildete Lageranordnung dieser Querbelastung ausweichen und eine optimale Lagerung der Rotorwelle auch in dieser mechanisch stark belasteten Situation gewährleisten.

Vorzugsweise ist radial außerhalb der Gleitlagersegmente wenigstens eine Ölnut vorhanden, die derart ausgebildet ist, dass in ihr enthaltenes Öl den Kontaktbereich zwischen den Aufnahmeflächen und den Anlageflächen zumindest teilweise schmiert. Besonders bevorzugt sind die ringförmigen Stützkörper mit der sphärischen Aufnahmefläche in axialer Richtung bezüglich der zu lagernden Rotorwelle weniger breit ausgebildet als die verschiedenen Gleitlagersegmente. Zwischen den einzelnen ringförmigen Stützkörper befindet sich in axialer Richtung folglich ein besonders bevorzugt als Hohlraum ausgebildeter Platz, der mit Öl gefüllt wird. Dieses Öl befindet sich in dem ebenfalls rotationssymmetrisch um die Längsachse der zu lagernden Welle ausgebildeten Hohlraum und schmiert so den Kontakt zwischen den Gleitlagersegmenten und den Stützkörpern.

Dazu sind bevorzugt in den Aufnahmeflächen und/oder in den Anlageflächen Vertiefungen, Nuten oder sonstige Strukturen beispielsweise in Form einer Textur vorhanden, die mit der Ölnut in fluidtechnischer Verbindung steht. Besonders bevorzugt ist die Textur ein Netz aus Vertiefungen, Rillen und/oder Nuten, die nach axial innen, also zur Ölnut hin, offen sind, sodass Öl aus der Ölnut in die Textur eindringen kann und so die schmierend Wirkung entfaltet. Nach axial außen, also von der Ölnut abgewandt, ist die Textur vorzugsweise dicht ausgebildet, sodass Öl nicht aus der Lageranordnung austreten kann.

Das in der Ölnut enthaltene Öl dient der Schmierung des Ölspaltes zwischen der Gleitfläche des Lagers, also den einzelnen Gleitflächen der Gleitlagersegmente, und der Welle. Damit das Öl aus der Ölnut, die sich vorzugsweise radial außerhalb der Gleitlagersegmente befindet, zu dem Ölspalt gelangen kann, ist vorzugsweise wenigstens eine Öltasche vorhanden. Eine Öltasche ist ein lokal begrenzter Hohlraum zwischen der Gleitfläche und der Welle, der durch wenigstens einen Kanal oder eine Bohrung mit der Ölnut verbunden ist. Vorzugsweise sind mehrere ÖItaschen, vorzugsweise äquidistant über den Umfang der Welle verteilt, vorhanden. Vorzugsweise wird das Öl aus der Ölnut nicht nur durch die Öltasche in den Zwischenraum zwischen Gleitfläche und Welle geleitet, sondern auch zum Schmieren der Textur, der Vertiefungen Nuten oder sonstiger Strukturen zwischen den Gleitlagersegmenten und dem Stützkörper verwendet.

Der Hohlraum, in dem sich das Öl befindet, wird bevorzugt nach radial außen durch das äußere Gehäuse, nach radial innen durch die Gleitlagersegment und in axialer Richtung durch die beiden Stützkörper begrenzt. In diesem Fall vereinfacht sich die Herstellung dieser Ölnut, da keine Vertiefungen oder Nuten in bestehende Bauteil eingebracht werden müssen.

Vorzugsweise ist einer der zwei Stützkörper derart angeordnet, dass er in axialer Richtung bezüglich der Längsrichtung der in der Lageranordnung zu lagernden Rotorwelle entfernbar ist, ohne dass die Rotorwelle aus der Lageranordnung entfernt werden muss. Bei dieser axialen Richtung, in die der Stützkörper zum Entfernen aus der Lageranordnung zu bewegen ist, handelt es sich vorzugsweise um die Richtung weg vom an der Rotorwelle angeordneten Rotor. Es handelt sich dabei bei dem einen Stützkörper vorzugsweise auch um den Stützkörper, der vom Rotor der Rotorwelle abgewandt angeordnet ist. Zum Entfernen des Stützkörpers aus der Lageranordnung sind gegebenenfalls Befestigungsmittel, beispielsweise Schrauben oder Bolzen zu entfernen, mit denen der Stützkörper beispielsweise am äußeren Gehäuse befestigt ist. Wichtig ist jedoch, dass der Stützkörper entfernt werden kann, ohne dass die Welle aus der Lageranordnung entfernt oder die Lageranordnung vollständig demontiert werden muss.

Besonders bevorzugt sind die Gleitlagersegmente in axialer Richtung entfernbar, ohne dass die Welle aus der Lageranordnung entfernt werden muss, wenn der Stützkörper entfernt ist. Nachdem der Stützkörper folglich in die axialer Richtung bewegt und vom äußeren Gehäuse entfernt wurde, können auch die einzelnen Gleitlagersegmente vorzugsweise in die gleiche Richtung verschoben und entfernt werden. Auch dazu müssen gegebenenfalls Befestigungsmittel, beispielsweise Schrauben, Stifte, Bolzen oder Verbindungsstäbe entfernt werden. Diese können die einzelnen Gleitlagersegmente am verbleibenden Stützkörper oder an anderen Gleitlagersegmenten befestigen und werden vor dem Entfernen der Gleitlagersegmente demontiert. Danach können die einzelnen Gleitlagersegmente von den übrigen Bauteilen der Lageranordnung entfernt werden, ohne dass die Welle demontiert werden muss.

Muss folglich bei einer hier beschriebenen Ausführungsform der Lageranordnung beispielsweise eines der Gleitlagersegmente ausgetauscht oder gewartet werden, ist es nicht notwendig, die vollständige Lageranordnung zu demontieren, was einen enormen konstruktiven, logistischen und zeitlichen Aufwand bedeuten würde.

Vorteilhafterweise ist zwischen zwei der Gleitlagersegmente ein Positionierstift angeordnet, der in korrespondierend ausgebildeten Teilbohrungen in den Gleitlagersegmenten positioniert ist. Besonders bevorzugt befindet sich zwischen jeweils zwei benachbarten Gleitlagersegmenten wenigstens ein Positionierstift. Vorzugsweise in den Seitenflächen der Gleitlagersegmente, die den jeweils benachbarten Gleitlagersegmenten zugewandt sind, befinden sich die Teilbohrungen. Unter einer "Teilbohrung" wird jede Bohrung verstanden, die sich jeweils zum Teil in zwei benachbarten Gleitlagersegmenten befindet. Dies kann beispielsweise dadurch erreicht werden, dass in zwei Seitenflächen von zwei benachbarten Gleitlagersegmenten jeweils Vertiefungen oder Rillen vorhanden sind, die gemeinsam eine Bohrung bilden, in die der wenigstens eine Positionierstift eingeführt werden kann, wenn die beiden Gleitlagersegmente nebeneinander angeordnet sind. In einem solchen Fall erstreckt sich die durch die beiden Teilbohrungen gebildete Bohrung beispielsweise parallel zur Längsachse der zu lagernden Welle. Die so gebildete Bohrung kann jedoch auch einen wachsenden oder einen schrumpfenden Abstand zur Längsachse aufweisen und somit nicht parallel zur Längsachse der zu lagernden Welle verlaufen.

Alternativ oder zusätzlich dazu können Teilbohrungen auch vorhanden sein, die sich beispielsweise in einem ersten Abschnitt vollständig in einem der Gleitlagersegmente befinden, in diesem jedoch so schräg verlaufen, dass sich ein zweiter Teil der durch zwei dieser Teilbohrungen gebildeten Bohrung in dem benachbarten Gleitlagersegmenten befindet. Unabhängig von der Ausgestaltung bilden zwei dieser Teilbohrungen eine Bohrung, die den Positionierstift aufnimmt und in der er angeordnet wird. Der Positionierstift dient dabei vorzugsweise dazu, die beiden Gleitlagersegmente, deren Teilbohrungen die Bohrung für diesen Positionierstift bilden, miteinander zu verbinden und Bewegungen der beiden Gleitlagersegmente relativ zueinander in zumindest einer Richtung, beispielsweise in Umfangsrichtung oder in radialer Richtung bezüglich der Längsachse der zu lagernden Welle zu verhindern.

Bevorzugt wirkt wenigstens einer der Positionierstift als Abstandshalter zwischen zwei Gleitlagersegmenten, sodass sich zwischen diesen einen Spalt befindet. Dieser auch als "Montagespalt" bezeichnete Spalt ist beispielsweise zwischen 5 mm und 1 cm breit. Ein Montagespalt ist dann von Vorteil, wenn nur noch das letzte Gleitlagersegment zu montieren ist und alle anderen Gleitlagersegmente bereits ihre Position zwischen der zu lagernden Welle und dem jeweiligen Stützkörper eingenommen haben. Durch den vorhandenen Spalt lassen sich die einzelnen Gleitlagersegmenten besonders einfach zueinander positionieren, dadurch den Spalt ein Spielraum vorhanden ist. Nach der Positionierung des letzten Gleitlagersegmentes wird vorzugsweise ein Positionierstift zwischen das zuletzt eingesetzte Gleitlagersegment und ein benachbartes Gleitlagersegment eingeführt, sodass der Spalt zwar noch vorhanden, eine weitere Bewegung der Gleitlagersegmente zueinander in dieser Richtung jedoch ausgeschlossen ist.

Durch die Positionierstifte können benachbarte Gleitlagersegmente miteinander verbunden, zueinander ausgerichtet, zueinander positioniert und/oder besser eingeführt und in die gewünschte Position gebracht werden.

Vorzugsweise weist wenigstens einer der Stützkörper eine dem anderen Stützkörper abgewandte sphärische Axial-Aufnahmefläche, an der ein Axiallagerring mit einer sphärischen Axial-Anlagefläche anliegt. Vorzugsweise ist an dem Axiallagerring wenigstens ein Lagerelement angeordnet, das als Axiallager für die zu lagernde Welle dient. Dadurch wird die Rotorwelle der Windkraftanlage, die durch die Lageranordnung gelagert wird, sowohl in axialer als auch in radialer Richtung gelagert. Die Gleitlagersegmente bilden dabei das Radiallager und das wenigstens eine Lagerelement das Axiallager. Vorzugsweise sind mehrere Lagerelemente, beispielsweise Gleitlagerelemente oder Kippsegmentlagerelemente vorhanden, die über den Umfang des Axiallagerringes verteilt sind. Besonders bevorzugt sind die Lagerelemente äquidistant über den Umfang verteilt.

In einer bevorzugten Ausgestaltung ist an dem Axiallagerring ein Anlaufring angeordnet, der an dem Axiallagerring anliegt. An ihm ist das wenigstens eine Lagerelement angeordnet. Vorzugsweise sind die bereits genannten mehreren Lagerelemente nicht direkt am Axiallagerring, sondern an dem an diesem anliegenden Anlaufring positioniert.

Vorzugsweise sind die Gleitlagersegmente in axialer Richtung durch wenigstens eine Spanneinrichtung verspannt. Die Spanneinrichtung verfügt bevorzugt über wenigstens einen Zentrierring, wenigstens einen Spannbacken sowie wenigstens einen Stift. Der Zentrierring und der wenigstens eine Spannbacken sind dabei bevorzugt an einander gegenüberliegenden Seiten der Gleitlagersegmente angeordnet. Sie sind durch den Stift miteinander verbunden und verspannt. Der Stift überträgt eine Zugkraft in axialer Richtung zwischen dem Spannbacken und dem Zentrierring. Der Stift ist vorzugsweise als Schraube ausgebildet. In diesem Fall verfügt der Spannbacken und/oder die Zentrierring über eine Bohrung mit einem Innengewinde, das zu dem Gewinde der Schraube korrespondiert. Besonders bevorzugt sind mehrere Spannbacken vorhanden. Diese sind über jeweils wenigstens einen Stift mit dem Zentrierring verbunden. Vorzugsweise ist jeweils zwischen zwei benachbarten Gleitlagersegmenten ein Spannbacken angeordnet, sodass über den Umfang verteilt die Anzahl der Spannbacken der Anzahl der Gleitlagersegmente entspricht. Befindet sich ein Spannbacken zwischen zwei benachbarten Gleitlagersegmenten bedeutet dies vorliegend, dass er die Kraft, die von dem Stift auf den Spannbacken übertragen wird, auf beide benachbarten Gleitlagersegmente überträgt.

Die Erfindung löst die gestellte Aufgabe zudem durch ein Lager für eine Lageranordnung gemäß den hier vorgestellten Ausführungsformen, das zwei ringförmige Stützkörper mit jeweils einer sphärischen Aufnahmefläche und eine Mehrzahl von Gleitlagersegmenten aufweist.

Die Erfindung löst die gestellte Aufgabe zudem durch ein Verfahren zum Montieren einer Lageranordnung der hier beschriebenen Art, dass die folgenden Schritte aufweist:
- Bereitstellen des ersten ringförmigen Stützkörpers an dem äußeren Gehäuse, wobei die Rotorwelle durch den Stützkörper verläuft,
- Anordnen der Gleitlagersegmente zwischen der Rotorwelle und dem ersten ringförmigen Stützkörper,
- Positionieren des zweiten ringförmigen Stützkörpers zwischen den Gleitlagersegmenten und dem äußeren Gehäuse.

Zunächst wird der erste ringförmige Stützkörper an dem äußeren Gehäuse bereitgestellt. Dazu kann beispielsweise ein ringförmiger Stützkörper, der als separates Bauteil ausgebildet ist, an dem äußeren Gehäuse angeordnet werden. Zusätzlich kann dieser erste ringförmige Stützkörper an dem äußeren Gehäuse befestigt werden, wozu Befestigungsmittel, beispielsweise Schrauben, Stifte oder Bolzen verwendet werden. Der erste ringförmige Stützkörper kann einstückig ausgebildet sein oder mehrere Abschnitte aufweisen, die als separate Elemente ausgebildet sind und am äußeren Gehäuse befestigt werden. Auch das äußere Gehäuse kann einstückig oder mehrstückig ausgebildet sein. Alternativ dazu kann der erste ringförmige Stützkörper auch einstückig mit dem äußeren Gehäuse ausgebildet sein.

In einer besonders bevorzugten Ausgestaltung weist das äußere Gehäuse wenigstens zwei Teile auf, von denen eines ein Unterteil und eines ein Oberteil ist. Zur Montage der Lageranordnung wird in diesem Fall besonders bevorzugt die zu lagernden Welle bereits oberhalb des Unterteils des Gehäuses angeordnet. Der erste ringförmige Stützkörper, der in diesem Fall bevorzugt einstückig ausgebildet ist, wird über die zu lagernden Welle gefädelt, sodass sich die Welle durch den ersten ringförmigen Stützkörper hindurch erstreckt. Der erste ringförmige Stützkörper wird dann an dem Unterteil des äußeren Gehäuses befestigt, bevor das Oberteil des äußeren Gehäuses mit dem Unterteil des äußeren Gehäuses verbunden wird, sodass auch eine Verbindung zwischen dem ersten ringförmigen Stützkörper und dem Oberteil des äußeren Gehäuses erfolgt. Diese Verbindung muss nicht, kann jedoch durch zusätzliche Befestigungsmittel gesichert werden.

In diesem Zustand wird die zu lagernden Welle durch eine separate, hier nicht weiter beschriebene Stützanordnung gehalten, da der Innendurchmesser des ersten ringförmigen Stützkörpers deutlich größer ist als der Außendurchmesser der zu lagernden Welle. In den auf diese Weise erzeugten Zwischenraum werden nun die Gleitlagersegmente eingeführt, was besonders bevorzugt dadurch geschehen kann, dass sie in axialer Richtung entlang der gehaltenen Welle verschoben werden, bis sie radial außen mit ihrer Anlagefläche an der Aufnahmefläche des ersten ringförmigen Stützkörpers anliegen. Besonders bevorzugt werden sie bei diesem Verschieben auf den Rotor der Rotorwelle zu verschoben.

Nachdem jeweils zwei benachbarte Gleitlagersegmente in der für sie endgültigen Position zwischen der Rotorwelle und dem ersten ringförmigen Stützkörper angeordnet sind, können, sofern vorhanden und notwendig, die Positionierstifte in die in den Gleitlagersegmenten vorhandenen Teilbohrungen eingeführt werden. Alternativ dazu können auch zunächst alle Gleitlagersegmente in die gewünschte Position gebracht werden, bevor die Positionierstifte eingeführt werden. In einer weiteren Ausführungsform werden die Positionierstifte und die Gleitlagersegment zusammen in die gewünschte Position gebracht.

Nachdem die Gleitlagersegmente und gegebenenfalls die Positionierstift angeordnet und an den jeweiligen Bauteilen befestigt wurden, wird der zweite ringförmige Stützkörper zwischen den Gleitlagersegmenten und dem äußeren Gehäuse positioniert. In einer bevorzugten Ausgestaltung ist der zweite Stützkörper mehrteilig ausgebildet, besteht folglich zumindest aus zwei, gegebenenfalls auch aus mehr Ringteilen. Dies hat den Vorteil, dass der zweite ringförmige Stützkörper zum Montieren nicht über die zu lagernden Welle gefädelt werden muss, sondern in mehreren Teilen befestigt werden kann. Dazu werden die verschiedenen Ringteilen, die den zweiten Stützkörper bilden, ebenfalls in axialer Richtung, besonders bevorzugt auf den Rotor der Rotorwelle zu, verschoben und in den Zwischenraum zwischen den Gleitlagersegmenten und das äußere Gehäuse eingeschoben. Je weniger Ringteile den zweiten Stützkörper bilden, desto weniger störend ist der Einfluss von Fertigungstoleranzen und Montagetoleranzen und desto genauer ist die Aufnahmefläche eine sphärische Fläche.

Die Stützkörper sind bevorzugt aus einem Metall oder einem Kunststoff hergestellt. Kunststoff bietet dabei den Vorteil, elektrisch isolierend zu sein, so dass dadurch die Welle und die Gleitlagersegmente vom äußeren Gehäuse elektrisch getrennt wird, ohne dass zusätzliche Bauteile oder Fertigungsschritte notwendig sind. Eine elektrische Isolierung kann auch durch eine beispielsweise auf die Aufnahmefläche und/oder die Anlagefläche aufgebrachte Beschichtung aus einem elektrisch isolierenden Material erreicht werden.

In umgekehrter Reihenfolge lässt sich die Lageranordnung soweit demontieren, dass die einzelnen Bauteile gewartet, repariert oder ausgetauscht werden können. Auch hierfür ist es von Vorteil, wenn der zweite ringförmige Stützkörper mehrteilig ausgebildet ist, da die einzelnen Ringteile auf diese Weise leicht entfernt und abtransportiert werden können.

In einer bevorzugten Ausgestaltung der Lageranordnung sind die Anlageflächen der Gleitlagersegmente und/oder die Aufnahmeflächen der ringförmigen Stützkörper beschichtet. Diese Beschichtung kann ein Kunststoff sein, um beispielsweise die Haftreibung zwischen den verschiedenen Bauteilen zu reduzieren. Alternativ oder zusätzlich dazu kann die Beschichtung auch eine elektrische isolierende Beschichtung sein, beispielsweise das Lager relativ zum Gehäuse elektrisch zu isolieren, was insbesondere von Vorteil ist, da es sich bei einer Windkraftanlage um eine stromerzeugende Anlage handelt.

Mithilfe der beiliegenden Zeichnungen werden nachfolgend einige Ausführungsbeispiele der vorliegenden Erfindung näher erläutert. Es zeigen:
- Figur 1: - die schematische 3-dimensionale Ansicht von Teilen einer Lageranordnung,
- Figuren 2 - 6: - Schnittdarstellungen durch die Teile nach unterschiedlichen Verfahrensschritten bei der Montage,
- Figur 7: - die schematische Darstellung eines ersten Stützkörpers,
- Figur 8: - die schematische Darstellung eines zweiten Stützkörpers
- Figuren 9 - 11: - die schematische Darstellung unterschiedlicher Teilbohrungen und
- Figur 12: - die schematische Darstellung eines Teiles eines Lagers
- Figur 13: - weitere Teile des Lagers gemäß einem weiteren Ausführungsbeispiel der vorliegenden Erfindung.

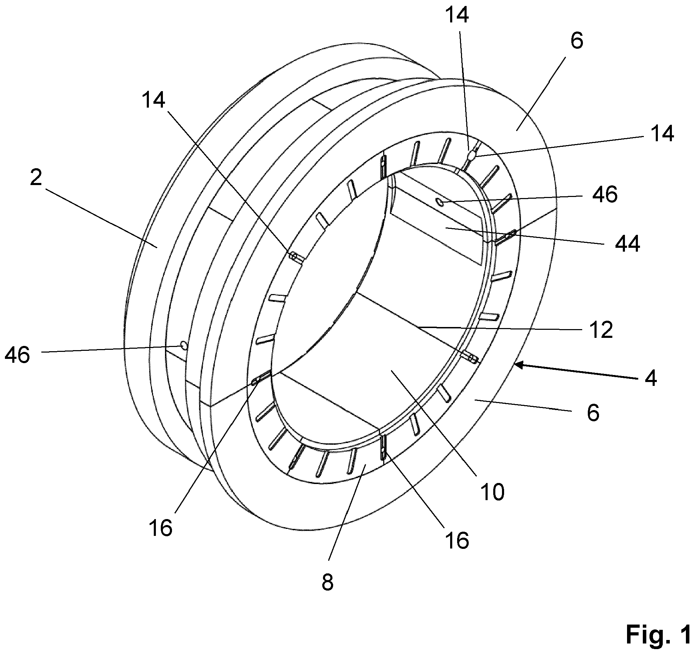

Figur 1 zeigt schematisch einen Teil einer Lageranordnung gemäß einem ersten Ausführungsbeispiel der vorliegenden Erfindung. Sie verfügt über einen ersten Stützkörper 2 und einen zweiten Stützkörper 4, die beide ringförmig ausgebildet sind. Der erste Stützkörper 2 ist im gezeigten Ausführungsbeispiel einstückig ausgebildet, während der zweite Stützkörper 4 zwei Ringteile 6 aufweist. Radial innerhalb des ersten Stützkörpers 2 und des zweiten Stützkörpers 4 befinden sich mehrere Gleitlagersegmente 8, die radial innen jeweils eine Gleitfläche 10 aufweisen. An ihren in Umfangsrichtung befindenden Seitenwänden 12 befinden sich Teilbohrungen 14, die im gezeigten Zustand, in dem jeweils zwei Gleitlagersegmente 8 nebeneinander angeordnet sind, jeweils eine Bohrung 16 bilden, in die ein nicht dargestellter Positionierstift 18 einführbar ist. In der gezeigten Ausführungsform ist zudem ein Montagespalt 20 dargestellt, der die Montage insbesondere des letzten der gezeigten Gleitlagersegmente 8 vereinfacht.

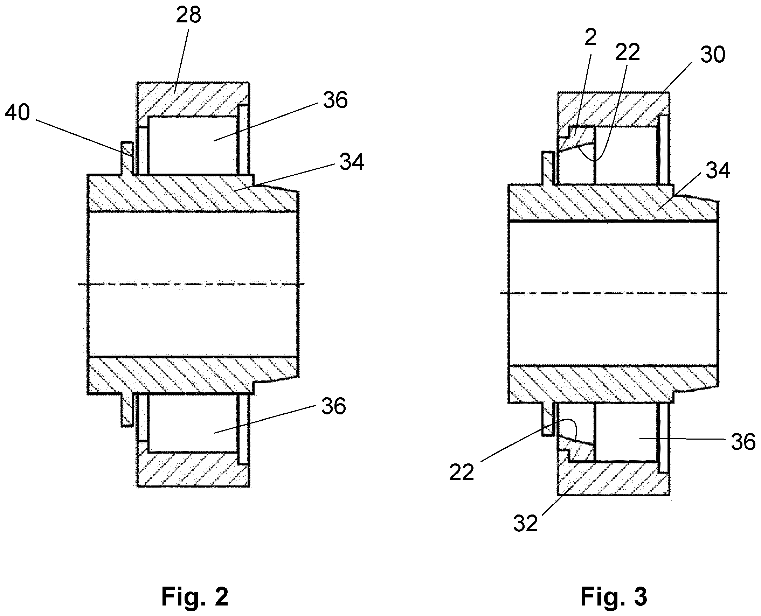

Die Figuren 2 bis 6 zeigen jeweils eine schematische Schnittdarstellung durch die Lageranordnung nach unterschiedlichen Verfahrensschritten bei der Montage der Lageranordnung. In Figur 2 ist die Rotorwelle 34 dargestellt. Sie befindet sich im äußeren Gehäuse 28, wobei sich zwischen dem Gehäuse 28 und der Rotorwelle 34 ein umlaufender Zwischenraum 36 ergibt. In diesen werden weitere Bauteile eingeführt. Die Rotorwelle 34 verfügt über einen im gezeigten Ausführungsbeispiel einstückig mit der Rotorwelle 34 ausgebildeten Flansch 40, der als Axiallager dient. Der Zwischenraum 36, der sich ringförmig um die Rotorwelle 34 erstreckt, hat eine im gezeigten Ausführungsbeispiel von links nach rechts zunehmende Ausdehnung. Im gezeigten Ausführungsbeispiel erstreckt sich der Rotor der Rotorwelle 34 auf der linken Seite, ist jedoch nicht gezeigt.

Figur 3 zeigt die Darstellung aus Figur 2, in die nun von rechts, also in axialer Richtung, der erste Stützkörper 2 eingeführt wurde. Er verfügt radial außen über einen Vorsprung, mit dem er an einem nach radial innen vorspringender Vorsprung des äußeren Gehäuses 28 anliegt, sodass eine weitere Verschiebung des ersten Stützkörpers 2 nach links nicht möglich ist. Zwischen der Aufnahmefläche 22 und der Außenfläche der Rotorwelle 34 ist weiterhin der Zwischenraum 36, sodass in diesem Zustand die Rotorwelle 34 durch eine nicht dargestellte Vorrichtung gehalten werden muss.

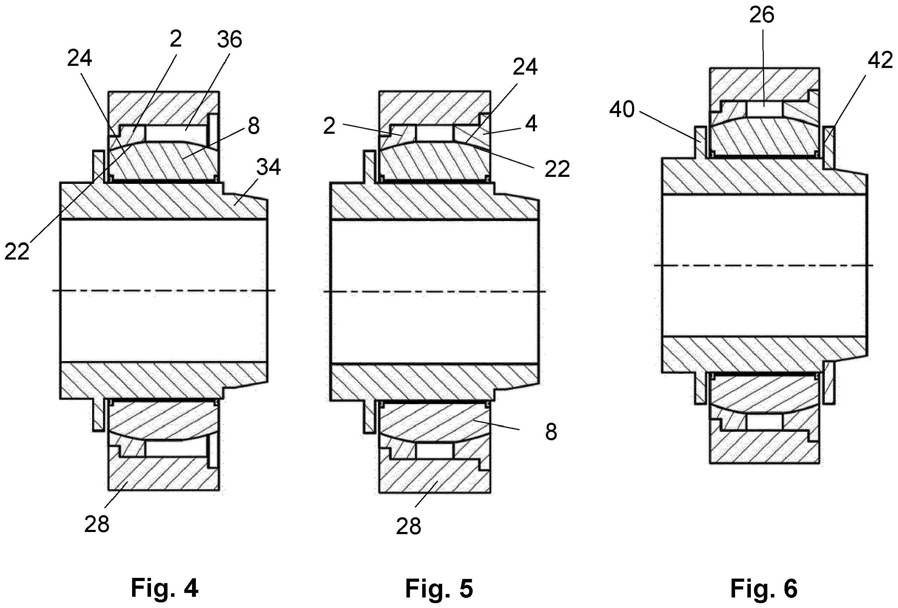

Im Vergleich zur Darstellung aus Figur 3 sind in Figur 4 nun zusätzlich zum ersten Stützkörper 2 die Gleitlagersegmente 8 eingeführt. Dabei werden die Gleitlagersegmente 8 im gezeigten Ausführungsbeispiel von rechts in axialer Richtung in die Vorrichtung eingeführt, sodass sie im Zwischenraum 36 zwischen der Rotorwelle 34 und dem äußeren Gehäuse 28 angeordnet werden. Die Gleitlagersegmente 8 werden soweit in die Lageranordnung eingeschoben, bis ihre Anlagefläche 24 an der Aufnahmefläche 22 des ersten Stützkörpers 2 anliegt. Ein weiteres Verschieben der Gleitlagersegmente 8 im gezeigten Ausführungsbeispiel nach rechts ist daher nicht möglich. Durch die kugelförmig gewölbten Aufnahmeflächen 22 und Anlageflächen 24 kommt es zu einer Ausrichtung der Bauteile in optimaler Weise.

Figur 5 zeigt die weiter montierte Lageranordnung. Im Vergleich zur Figur 4 ist zusätzlich der zweite Stützkörper 4 von rechts in radialer Richtung eingeschoben worden, der in dem Zwischenraum zwischen dem äußeren Gehäuse 28 und den Gleitlagersegmenten 8 angeordnet wird. Auch hier kommt die kugelförmig gewölbten Aufnahmefläche 22 mit der ebenfalls kugelförmig gewölbten Anlagefläche 24 so in Kontakt, dass eine automatische Ausrichtung erfolgt. Die vollständige oder teilweise Demontage der Lageranordnung erfolgt in umgekehrter Reihenfolge. Die einzelnen Bauteile können nach rechts aus der Anordnung entfernt werden, wozu gegebenenfalls vorhandene Befestigungsmittel gelöst werden müssen. Es ist aber nicht notwendig, die gesamte Lageranordnung zu demontieren oder gar die Rotorwelle 34 aus der Lageranordnung zu entfernen.

Figur 6 zeigt eine Schnittdarstellung durch die fertig montierte Anordnung. Zusätzlich zu dem in Figur 5 gezeigten Zustand ist ein zweiter Axialflansch 42 montiert worden, der gemeinsam mit dem Flansch 40 die Rotorwelle 34 in beide axialen Richtungen lagert.

Man erkennt, dass die Gleitlagersegmente 8 an ihrer radial außenliegenden Seite über Aufnahmefläche 24 verfügen, die ebenfalls kugelförmig gewölbt sind und zu den Aufnahmeflächen 22 korrespondierend ausgebildet sind. Zwischen den beiden Stützkörpern 2, 4 befindet sich eine Ölnut 26, die mit Öl gefüllt ist, dass durch nicht gezeigte Strukturen, Vertiefungen oder Texturen in einen Zwischenraum zwischen den Aufnahmeflächen 22 und den Anlageflächen 24 eindringen und so eine stehende Wirkung entfalten kann.

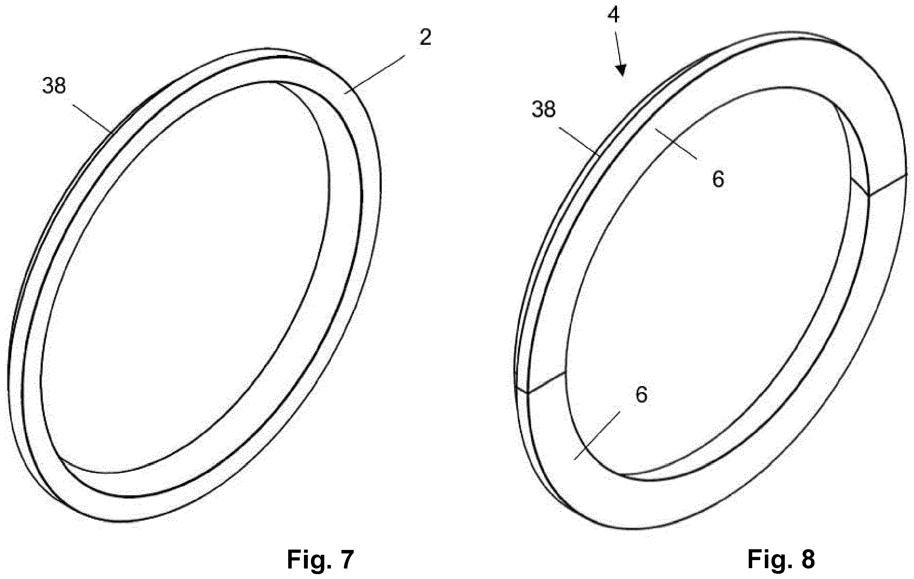

Figur 7 zeigt schematisch einem ersten Stützkörper 2. Er verfügt an der in Figur 7 hinteren Seite über den Vorsprung 38, mit dem er an einem korrespondierend ausgebildeten Vorsprung des äußeren Gehäuses 28 anliegt, wie dies insbesondere in den Figuren 4, 5 und 6 dargestellt ist. Der erste Stützkörper 2 ist im gezeigten Ausführungsbeispiel einstückig ausgebildet.

Im Gegensatz dazu zeigt Figur 8 schematisch einen zweiten Stützkörper 4, der zwei Ringteile 6 aufweist. Auch er verfügt über einen Vorsprung 38, mit dem er an einem Vorsprung am äußeren Gehäuse 28 anliegt, der in Figur 6 dargestellt ist. Durch die mehrteilige Ausgestaltung ist es möglich, einzelne Ringteile 6 zu entfernen, sollte beispielsweise nur der zweite Stützkörper 4 repariert, ersetzt oder gewartet werden müssen. Durch die mehrteilige Ausgestaltung ist es zudem möglich, den vollständigen zweiten Stützkörper 4 aus der Lageranordnung zu entfernen, ohne dass er von der Rotorwelle 34 herunter gefädelt werden müsste.

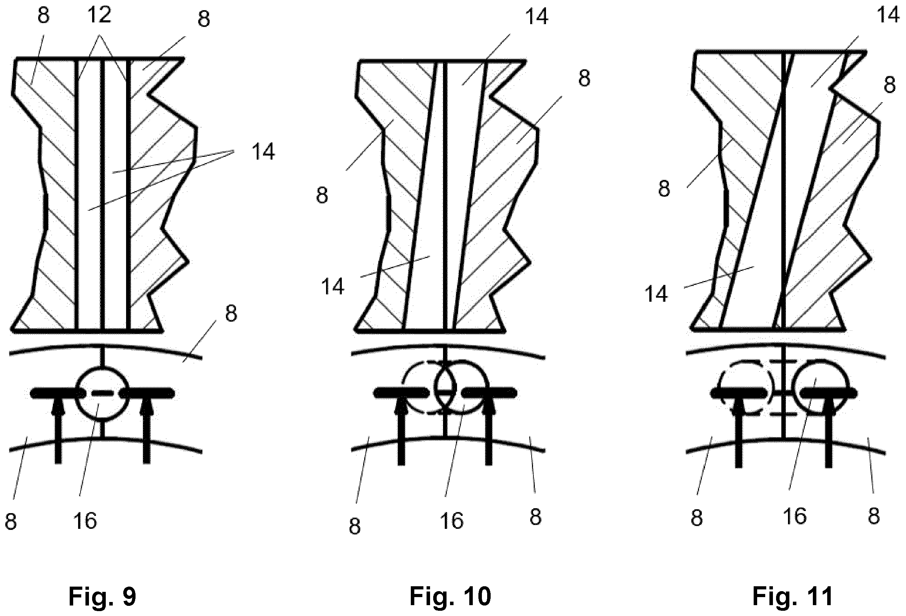

Die Figuren 9 bis 11 zeigen schematisch unterschiedlich ausgebildete Bohrungen 16. Man erkennt jeweils benachbarte Gleitlagersegmente 8, von denen jeweils nur Teile dargestellt sind. In Figur 9 sind in den Seitenwänden 12 der beiden Gleitlagersegmente 8 Teilbohrungen 14 angeordnet, die jeweils als Vertiefung ausgebildet sind und wie eine Nut hergestellt werden können. In der in Figur 9 gezeigten Position bilden sie gemeinsam einen durchgehenden Bogen 16, in die ein nicht gezeigter Positionsstift 18 eingeführt werden kann. Im unteren Bereich der Figur 9 sind Abschnitte der beiden Gleitlagersegmente 8 gezeigt, zwischen denen sich die Bohrung 16 befindet. In dieser axialen Ansicht bezüglich der Längsachse der zu lagernden Welle bildet die Bohrung 16 eine gerade Linie, die sich in Blickrichtung erstreckt. Durch diese Ausgestaltung der Bohrung 16 wird eine Positionierung zweier benachbarter Gleitlagersegmente 8 relativ zueinander in radialer Richtung erreicht. Die einzelnen Gleitlagersegmente 8 können in axialer Richtung weiterhin relativ zueinander bewegt werden. Diese Ausgestaltung hat den Vorteil, dass einzelne Gleitlagersegmente 8 ausgetauscht werden können, ohne dass in der Bohrung enthaltener Positionierstift 18 entfernt werden muss. Meist ist es jedoch von Vorteil, den Positionierstift 18 zu entfernen.

Figur 10 zeigt eine etwas andere Darstellung. Auch hier ist im oberen Bereich eine Schnittdarstellung gezeigt, in der die beiden Teilbohrungen 14 zu erkennen sind. Diese erstrecken sich nun jedoch leicht geneigt im Vergleich zu der in Figur 9 gezeigten Darstellung. Daher ist im unteren Bereich der Figur 10 zu erkennen, dass die aus den beiden Teilbohrungen 14 gebildete Bohrung 16 sich nicht vollständig in Blickrichtung erstreckt, sondern leicht geneigt dazu ist. Dennoch ist ein jeder Stelle der Bohrung 16 ein Teil der Bohrung in jedem der beiden beteiligten Gleitlagersegmente 8 angeordnet.

Dies ändert sich in Figur 11. Hier erstreckt sich die Bohrung 16 soweit aus der axialen Blickrichtung verschoben, dass die erste Teilbohrungen 14 und die zweite Teilbohrungen 14 sich an bestimmten Stellen, nämlich im oberen und unteren Bereich des oberen Bereich der Figur 11 vollständig in einem der beiden Gleitlagersegmente 8 befinden. Durch die unterschiedliche Ausgestaltung und Orientierung der Bohrung 16 lassen sich durch einen darin enthaltenen Positionierstift 18 unterschiedliche Bewegungen der beteiligten Gleitlagersegmente 8 relativ zueinander verhindern.

Durch die Ausgestaltungen in den Figuren 10 und 11 wird neben der Positionierung benachbarter Gleitlagersegmente 8 relativ zueinander in radialer Richtung auch eine Positionierung in axialer Richtung und in Umfangsrichtung erreicht. Auf diese Weise verbundene Gleitlagersegmente 8 können nicht voneinander getrennt oder aus der Lageranordnung entfernt werden, ohne einen Positionierstift zu entfernen. Die beiden Ausgestaltungen sind für unterschiedliche Belastungen von Vorteil. Die in Figur 10 gezeigte Anordnung der Bohrung 16 und des darin enthaltenen Positionierstiftes 18 sind besonders dann von Vorteil, wenn eine radiale Belastung auftritt, die lokal im Bereich des Positionierstiftes wirkt.

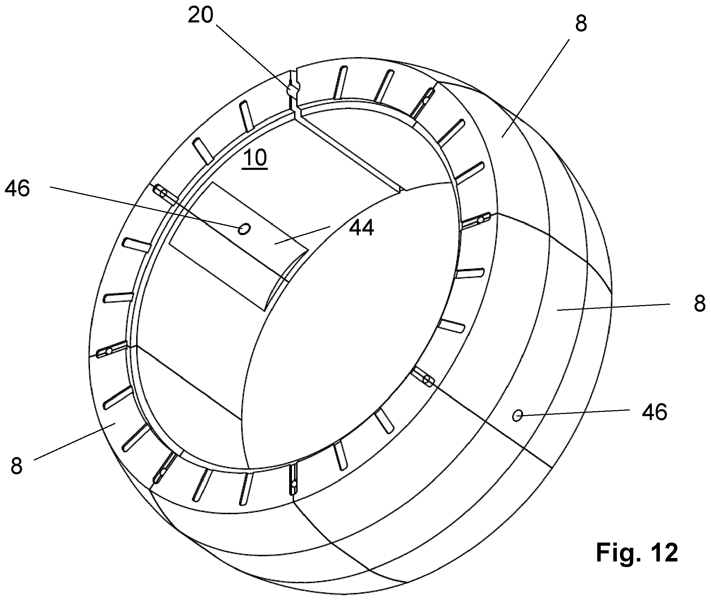

Figur 12 zeigt einen Teil einer Lageranordnung gemäß einem weiteren Ausführungsbeispiel der vorliegenden Erfindung. Man erkennt Gleitlagersegmente 8, die ringförmig montiert sind. Zwischen zwei der Gleitlagersegmente 8 befindet sich ein Montagespalt 20, der beispielsweise durch einen nicht gezeigten Positionierstift erzeugt wird. Die Gleitfläche 10 ist mit einer Vertiefung 44 ausgebildet, die eine ÖIzuführung 46 aufweist. Auf diese Weise wird der Zwischenraum zwischen der nicht dargestellten Rotorwelle und der Gleitfläche 10 geschmiert.

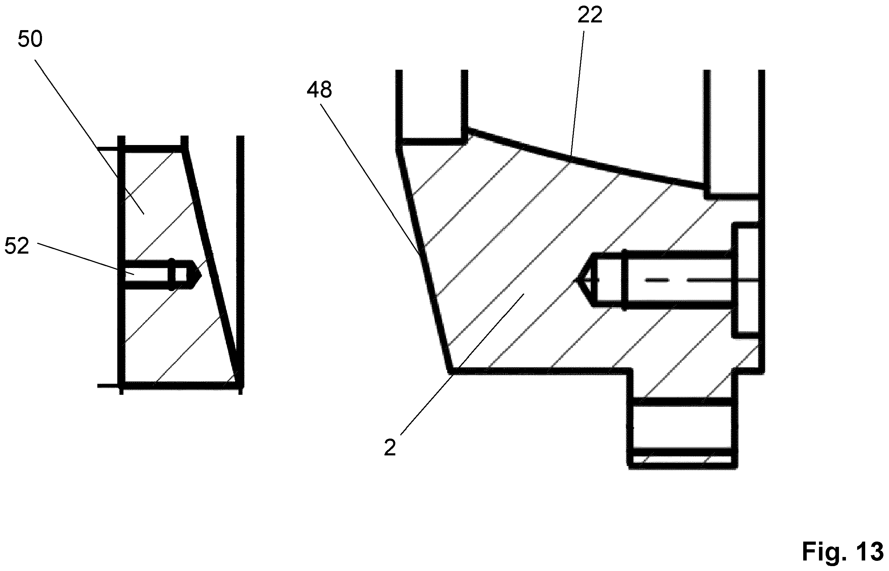

Figur 13 zeigt einen Ausschnitt einer Schnittdarstellung zweier Teile des Lagers. Rechts in der Figur ist ein Schnitt durch einen Teil des ersten Stützkörpers 2 dargestellt. Er verfügt über die Aufnahmefläche 22, die sphärisch ausgebildet ist und an der die in Figur 13 nicht dargestellte Anlagefläche 24 der Gleitlagersegmente 8 anliegt, wenn das Lager montiert ist. Zusätzlich verfügt der Stützkörper 2 über eine Axial-Aufnahmefläche 48, die vorzugsweise ebenfalls sphärisch ausgebildet ist.

Links in Figur 13 ist ein Schnitt durch einen Teil eines Axiallagerringes 50, der im gezeigten Ausschnitt eine Bohrung 52 aufweist, in der beispielsweise mittels einer Schraube ein Lagerelement angeordnet wird, das als Axiallager dient. Alternativ kann an dieser Stelle auch ein Anlaufring als Träger für die eigentlichen Axiallager und/oder deren Elemente angeordnet sein oder werden. Auf der dem ersten Stützkörper 2 zugewandten Seite verfügt der Axiallagerring 50 über einen Axial-Anlagefläche 54, die ebenfalls sphärisch ausgebildet ist. Sie verfügt über einen Krümmungsradius, der dem Krümmungsradius der Axial-Aufnahmefläche 48 entspricht. Im montierten Zustand liegen die Axial-Aufnahmefläche 48 und die Axial-Anlagefläche 54 aneinander an und erlauben so eine Bewegung der gelagerten Welle relativ zum Gehäuse des Lagers.

### Bezugszeichenliste

- 2: erster Stützkörper
- 4: zweiter Stützkörper
- 6: Ringteil
- 8: Gleitlagersegment
- 10: Gleitfläche
- 12: Seitenwand
- 14: Teilbohrung
- 16: Bohrung
- 18: Positionierstift
- 20: Montagespalt
- 22: Aufnahmefläche
- 24: Anlagefläche
- 26: Ölnut
- 28: äußeres Gehäuse
- 30: oberer Anteil
- 32: unterer Anteil
- 34: Rotorwelle
- 36: Zwischenraum
- 38: Vorsprung
- 40: Flansch
- 42: Axialflansch
- 44: Vertiefung
- 46: Ölzuführung
- 48: Axial-Aufnahmefläche
- 50: Axiallagerring
- 52: Bohrung
- 54: Axial-Anlagefläche

## Patentansprüche

1. Lageranordnung zum Lagern einer Rotorwelle (34) einer Windkraftanlage, wobei die Lageranordnung ein äußeres Gehäuse (28) und ein Lager mit einer Mehrzahl von Gleitlagersegmenten (8) aufweist, wobei das Lager zwei ringförmige Stützkörper (2, 4) mit jeweils einer sphärischen Aufnahmefläche (22) aufweist, die an dem äußeren Gehäuse (28) angeordnet sind, wobei die Gleitlagersegmente (8) mit einer sphärischen Anlagefläche (24) an den Aufnahmeflächen (22) anliegen, **dadurch gekennzeichnet, dass** einer der zwei Stützkörper (2, 4) derart angeordnet ist, dass er in axialer Richtung bezüglich der Längsrichtung einer in der Lageranordnung zu lagernden Welle (34) entfernbar ist, ohne dass die Welle (34) aus der Lageranordnung entfernt werden muss.

2. Lageranordnung nach Anspruch 1, **dadurch gekennzeichnet, dass** die Stützkörper (2, 4) derart angeordnet und ausgebildet sind, dass die sphärischen Aufnahmeflächen (22) den gleichen Radius und den gleichen Mittelpunkt aufweisen.

3. Lageranordnung nach Anspruch 1 oder 2, **dadurch gekennzeichnet, dass** radial außerhalb der Gleitlagersegmente (8) wenigstens eine Ölnut (26) vorhanden ist, die derart ausgebildet ist, dass in ihr enthaltenes Öl den Kontaktbereich zwischen den Aufnahmeflächen (22) und den Anlageflächen (24) zumindest teilweise schmiert.

4. Lageranordnung nach Anspruch 3, **dadurch gekennzeichnet, dass** in den Aufnahmeflächen (22) und/oder in den Anlageflächen (24) wenigstens eine Textur vorhanden ist, die mit der Ölnut (26) in fluidtechnischer Verbindung steht.

5. Lageranordnung nach einem der vorstehenden Ansprüche, **dadurch gekennzeichnet, dass** die Gleitlagersegmente (8) in axialer Richtung entfernbar sind, ohne dass die Welle (34) aus der Lageranordnung entfernt werden muss, wenn der Stützkörper (2, 4) entfernt ist.

6. Lageranordnung nach einem der vorstehenden Ansprüche, **dadurch gekennzeichnet, dass** zwischen wenigstens zwei der Gleitlagersegmente (8) ein Positionierstift (18) angeordnet ist, der in korrespondierend ausgebildeten Teilbohrungen (14) in den Gleitlagersegmenten (8) positioniert ist.

7. Lageranordnung nach Anspruch 6, **dadurch gekennzeichnet, dass** wenigstens ein Positionierstift (18) als Abstandshalter zwischen zwei Gleitlagersegmenten (8) wirkt und derart angeordnet ist, dass zwischen diesen ein Montagespalt (20) vorhanden ist.

8. Lageranordnung nach einem der vorstehenden Ansprüche, **dadurch gekennzeichnet, dass** wenigstens einer der Stützkörper (2, 4) eine dem anderen Stützkörper (4, 2) abgewandte sphärische Axial-Aufnahmefläche (48) aufweist, an der ein Axiallagerring (50) mit einer sphärischen Axial-Anlagefläche (54) anliegt.

9. Lageranordnung nach Anspruch 8, **dadurch gekennzeichnet, dass** an dem Axiallagerring (50) ein Anlaufring mit wenigstens einem, bevorzugt mehreren Axial-Lagerelementen anliegt.

10. Lageranordnung nach einem der vorstehenden Ansprüche, **dadurch gekennzeichnet, dass** die Gleitlagersegmente (8) in axialer Richtung durch wenigstens eine Spanneinrichtung verspannt sind, wobei die wenigstens eine Spanneinrichtung vorzugsweise wenigstens einen Zentrierring, wenigstens einen Spannbacken und wenigstens einen Stift aufweist, wobei der Zentrierring und der Spannbacken in axialer Richtung an einander gegenüberliegenden Seiten des Gleitlagersegmentes (8) angeordnet und durch den Stift verbunden sind.

11. Lager für eine Lageranordnung nach einem der vorstehenden Ansprüche, das zwei ringförmige Stützkörper (2, 4) mit jeweils einer sphärischen Aufnahmefläche (22) und eine Mehrzahl von Gleitlagersegmenten (8) aufweist.

12. Verfahren zum Montieren einer Lageranordnung nach einem der vorstehenden Ansprüche 1 bis 10 mit folgenden Schritten:
- Bereitstellen des ersten ringförmigen Stützkörpers (2) an dem äußeren Gehäuse (28), wobei die Rotorwelle (34) durch den Stützkörper (2) verläuft,
- Anordnen der Gleitlagersegmente (8) zwischen der Rotorwelle (34) und dem ersten ringförmigen Stützkörper (2),
- Positionieren des zweiten ringförmigen Stützkörpers (4) zwischen den Gleitlagersegmenten (8) und dem äußeren Gehäuse (34).

13. Verfahren nach Anspruch 12, **dadurch gekennzeichnet, dass** der zweite Stützkörper (4) aus mehreren, bevorzugt zwei Ringteilen (6) besteht.

## Claims

1. A bearing arrangement for supporting a rotor shaft (34) of a wind turbine, the bearing arrangement comprising an outer housing (28) and a bearing with a plurality of slide bearing segments (8), the bearing comprising two annular support bodies (2, 4), each with a spherical receiving surface (22), which are arranged on the outer housing (28), the slide bearing segments (8) resting with a spherical contact surface (24) on the receiving surfaces (22), **characterised in that** one of the two support bodies (2, 4) is arranged in such a way that it can be removed in the axial direction in relation to the longitudinal direction of a shaft to be supported in the bearing arrangement without the shaft (34) having to be removed from the bearing arrangement.

2. The bearing arrangement according to claim 1, **characterised in that** the support bodies (2, 4) are arranged and configured in such a way that the spherical receiving surfaces (22) have the same radius and the same central point.

3. The bearing arrangement according to claim 1 or 2, **characterised in that** at least one oil groove (26) is provided outside of the slide bearing segments (8), said groove being designed in such a way that oil contained within it at least partially lubricates the contact area between the receiving surfaces (22) and the contact surfaces (24).

4. The bearing arrangement according to claim 3, **characterised in that** at least one texture is provided in the receiving surfaces (22) and/or in the contact surfaces (24) that is fluidically connected to the oil groove (26).

5. The bearing arrangement according to one of the preceding claims, **characterised in that** the slide bearing segments (8) can be removed in the axial direction without having to remove the shaft (34) from the bearing arrangement when the support body (2, 4) is removed.

6. The bearing arrangement according to one of the preceding claims, **characterised in that** a positioning pin (18) is arranged between at least two of the slide bearing segments (8), said pin being positioned in correspondingly designed partial bores (14) in the slide bearing segments (8).

7. The bearing arrangement according to claim 6, **characterised in that** at least one positioning pin (18) acts as a spacer between two slide bearing segments (8) and is arranged such that there is a mounting gap (20) between said segments.

8. The bearing arrangement according to one of the preceding claims, **characterised in that** at least one of the support bodies (2, 4) comprises a spherical axial receiving surface (48) facing away from the other support body (4, 2) on which an axial bearing ring (50) rests with a spherical axial contact surface (54).

9. The bearing arrangement according to claim 8, **characterised in that** a stop ring with at least one, but preferably multiple axial bearing elements, rests on the axial bearing ring (50).

10. The bearing arrangement according to one of the preceding claims, **characterised in that** the slide bearing segments (8) are tensioned in the axial direction by at least one tensioning device, the at least one tensioning device preferably comprising at least one centring ring, at least one clamping jaw and at least one pin, the centring ring and the clamping jaw being arranged in the axial direction on opposite sides of the slide bearing segment (8) and connected by the pin.

11. A bearing for a bearing arrangement according to one of the preceding claims that comprises two annular support bodies (2, 4), each with a spherical receiving surface (22) and a plurality of slide bearing segments (8).

12. A method for mounting a bearing arrangement according to one of the preceding claims 1 to 10 comprising the following steps:
- providing the first annular support body (2) on the outer housing (28), the rotor shaft (34) extending through the support body (2),
- arranging the slide bearing segments (8) between the rotor shaft (34) and the first annular support body (2),
- positioning the second annular support body (4) between the slide bearing segments (8) and the outer housing (34).

13. The method according to claim 12, **characterised in that** the second support body (4) consists of multiple, preferably two, ring parts (6).

## Revendications

1. Agencement de palier pour supporter un arbre de rotor (34) d'une éolienne, l'agencement de palier comprenant un boîtier extérieur (28) et un palier ayant une pluralité de segments de palier lisse (8), le palier comprenant deux corps de soutien annulaires (2, 4) ayant chacun une surface de réception sphérique (22), qui sont disposés sur le boîtier extérieur (28), les segments de palier lisse (8) s'appuyant avec une surface d'appui sphérique (24) contre les surfaces de réception (22),
**caractérisé en ce que** l'un des deux corps de soutien (2, 4) est disposé de manière à pouvoir être retiré dans la direction axiale par rapport à la direction longitudinale d'un arbre (34) à supporter dans l'agencement de palier, sans qu'il soit nécessaire de retirer l'arbre (34) de l'agencement de palier.

2. Agencement de palier selon la revendication 1,
**caractérisé en ce que** les corps de soutien (2, 4) sont disposés et configurés de telle sorte que les surfaces de réception sphériques (22) présentent le même rayon et le même centre.

3. Agencement de palier selon la revendication 1 ou 2,
**caractérisé en ce qu'**au moins une rainure à huile (26) est prévue radialement à l'extérieur des segments de palier lisse (8), qui est conçue de telle sorte que l'huile qu'elle contient lubrifie au moins partiellement la zone de contact entre les surfaces de réception (22) et les surfaces d'appui (24).

4. Agencement de palier selon la revendication 3,
**caractérisé en ce qu'**au moins une texture est prévue dans les surfaces de réception (22) et/ou dans les surfaces d'appui (24), laquelle est en communication fluidique avec la rainure à huile (26).

5. Agencement de palier selon l'une des revendications précédentes,
**caractérisé en ce que** les segments de palier lisse (8) peuvent être retirés dans la direction axiale sans qu'il soit nécessaire de retirer l'arbre (34) de l'agencement de palier, lorsque le corps de soutien (2, 4) est retiré.

6. Agencement de palier selon l'une des revendications précédentes,
**caractérisé en ce qu'**une tige de positionnement (18) est disposée entre au moins deux des segments de palier lisse (8), laquelle est positionnée dans des alésages partiels (14) formés de manière correspondante dans les segments de palier lisse (8).

7. Agencement de palier selon la revendication 6,
**caractérisé en ce qu'**au moins une tige de positionnement (18) agit comme élément d'écartement entre deux segments de palier lisse (8) et est disposée de telle sorte qu'il existe entre eux une fente de montage (20).

8. Agencement de palier selon l'une des revendications précédentes,
**caractérisé en ce que** l'un au moins des corps de soutien (2, 4) présente une surface de réception sphérique axiale (48) détournée de l'autre corps de soutien (4, 2), contre laquelle s'appuie une bague de palier axial (50) avec une surface d'appui sphérique axiale (54).

9. Agencement de palier selon la revendication 8,
**caractérisé en ce qu'**une bague de butée ayant au moins un, de préférence plusieurs, éléments de palier axial s'appuie contre la bague de palier axial (50).

10. Agencement de palier selon l'une des revendications précédentes,
**caractérisé en ce que** les segments de palier lisse (8) sont serrés dans la direction axiale par au moins un dispositif de serrage, ledit au moins un dispositif de serrage comprenant de préférence au moins une bague de centrage, au moins une mâchoire de serrage et au moins une tige, la bague de centrage et la mâchoire de serrage étant disposées dans la direction axiale sur des côtés du segment de palier lisse (8) opposés l'un à l'autre et étant reliées par la tige.

11. Palier pour un agencement de palier selon l'une des revendications précédentes, comprenant deux corps de soutien annulaires (2, 4) ayant chacun une surface de réception sphérique (22) et une pluralité de segments de palier lisse (8).

12. Procédé de montage d'un agencement de palier selon l'une des revendications précédentes 1 à 10, comprenant les étapes suivantes consistant à :
- prévoir le premier corps de soutien annulaire (2) sur le boîtier extérieur (28), l'arbre de rotor (34) traversant le corps de soutien (2),
- agencer les segments de palier lisse (8) entre l'arbre de rotor (34) et le premier corps de soutien annulaire (2),
- positionner le deuxième corps de soutien annulaire (4) entre les segments de palier lisse (8) et le boîtier extérieur (34).

13. Procédé selon la revendication 12,
**caractérisé en ce que** le deuxième corps de soutien (4) est constitué de plusieurs, de préférence de deux, parties d'anneau (6).
